# EUROPEAN PATENT SPECIFICATION

(11) **EP 3 544 919 B1**
(45) Date of publication and mention of the grant of the patent: **06.01.2021**
(21) Application number: 17801726.5
(22) Date of filing: 24.11.2017
(51) Int. Cl.: B66B 11/02

(54) **CAR CORNER BRACKET FOR JOINING TWO SIDE WALL ELEMENTS OF AN ELEVATOR CAR**
KABINENECKWINKEL ZUR VERBINDUNG VON ZWEI SEITENWANDELEMENTEN EINER AUFZUGSKABINE
SUPPORT CORNIER DE CABINE PERMETTANT DE RELIER DEUX ÉLÉMENTS DE PAROI LATÉRALE D'UNE CABINE D'ASCENSEUR

(30) Priority: 24.11.2016 EP 16200584
(43) Date of publication of application: 02.10.2019
(73) Proprietor: Inventio AG, 6052 Hergiswil (CH)
(72) Inventor: HAGAWANE, Nilesh, Pune 411 024 (IN); PATIL, Pankaj P., 425011 Jalgaon (IN)
(86) International application number: PCT/EP2017/080305
(87) International publication number: WO 2018/096081

(56) References cited:
- WO-A1-2006/100542
- GB-A- 2 263 097
- JP-U- S58 106 364

## Description

The invention relates to a car corner bracket for joining two side wall elements of an elevator car, a car corner member, an elevator car arrangement, an elevator car and a method for assembling an elevator car arrangement. Elevator cars regularly comprise a support frame, a floor structure and a ceiling structure, as well as at least one car door and side walls extending between the floor structure and the ceiling structure.

The support frame may be adapted to varying dimensions of the space to be enclosed by the walls and doors of the elevator car by an expandable platform, as for example disclosed in US 8,141,683 B1, comprising corner members and side members forming and adjustable frame assembly. Here, once the support frame is fixed the dimensions of the car are determined.

Usually the side walls consist of side wall elements which are detachably connected to the support frame, such that a side wall element may be dismounted easily and replaced with a new one, in case a wall element has been damaged or a new design is desired.

As the elevator cars have various sizes according to the specified nominal capacity of an elevator, the side wall elements may consist of one or more panel elements which are aligned end-to-end within one wall. In a corner of the elevator car one side wall meets another side wall so that the panel elements to be connected are arranged neighbouring each other including a corner angle.

The wall panels may be fastened directly to the support frame or may be part of an elevator protecting sleeve consisting of plates, corner buttons and plane buttons, as disclosed for example in CN20252929679. Plates belonging to adjoining walls are connected by a corner element formed as a profiled corner fillet, having two receptions, each receiving a plate. Such a corner member for use in attaching furniture panels and the like is also shown in US 4,477,201, wherein the corner member also provides a location for an attaching fastener. However, the dimensions of the plates have to be chosen carefully to fit the protecting sleeve into the elevator car.

US 4,199,907 discloses a panel joint for two upstanding panel members at right angles to another. A joining member has vertical and inclined slots which cooperate with spacers on the plate members. The spacers include a cam surface which cooperates with a tapered transition portion of the slots to force first and second panel members tightly together. The joining member facilitates joining panels having surfaces which may not be absolutely flat. The joining member does not compensate any deviations of the panel widths.

JP S58 106364 shows a car corner bracket for joining two side wall elements of an elevator car by using blocking members. The respective blocking member comprise a wedge-like rest nose which presses against an undercut in a lateral inner wall of a reception of the corner bracket to form a snap-lock connection. Once the snap-lock connection is established, the dimensions of the car are determined. This car corner bracket does not compensate any deviations of the panel widths.

It is the object of the invention to provide a car corner bracket for joining two side wall elements of an elevator car, a car corner member, an elevator car arrangement, an elevator car and a method for assembling an elevator car arrangement which avoid the disadvantages of the known solutions and which provide a comfortable solution for the arrangement of side wall elements during assembling, repairing or remodelling of elevator cars.

According to the invention a car corner bracket for joining two side wall elements of an elevator car comprises two receptions suitable for receiving panel elements. A side wall element comprises one or more panel elements. The panel elements to be fitted into the receptions of the car corner bracket belong to two different walls of the elevator car, for example to a left side wall and a rear wall, to a rear wall and a right side wall, to a left side wall and a left front wall or to a right side wall and a right front wall. The front walls enclose the door opening of the elevator car.

At least one of the receptions is equipped with at least one retainer for receiving an abutment element. The abutment element defines a position for and/or fixes a panel element. The abutment element comprises at least one abutment surface, preferably at a front face, which gets in contact with the panel element, when the panel element is assembled.

Hence the assembling position of the panel element is not defined by the car corner bracket as such, but by an abutment element. Thus, when the car corner bracket is fixed to a frame structure of an elevator car there might still be some freedom for adjusting the position of the panel elements.

The panel element hence do not have to fulfil very exact dimension criteria, which would be difficult, if for example wall elements have to be replaced and have to be purchased from a new producer.

The retainer preferably is suitable for allowing the abutment element to take more than one fixed position, such that the position of the abutment surface is adjustable and panels of various widths may be used for the assembling of walls.

Preferably at least one of the retainers is arranged in a front wall of one of the receptions. The insertion direction of the abutment element may hence be aligned with the insertion direction of the panel element. The front faces of the abutment element and the panel element may butt against each other.

The car corner bracket comprises a first outer flank and a second outer flank, including a corner angle and a first inner flank and a second inner flank, including a corner angle.

The first inner flank and the first outer flank as well as the second inner flank and the second outer flank are arranged in parallel and have a distance between each other respectively.

The first inner flank, the first outer flank and an end part of the second outer flank define a first of said receptions. Said end part is an edge portion of the respective flank at the corner. The end part of the second outer flank forms the front wall of this reception.

The second inner flank, an end part of the first inner flank and a second part of the second outer flank define a second of said receptions. Thus, this flank consists of the before mentioned end part (as a first part) and this second part. Said second part is an outer portion of the respective flank which adjoins the end part (as a first part) of this flank. The end part of the first inner flank forms the front wall of the second reception.

The car corner bracket has a simple design, for example with two rectangular receptions arranged in a right angle. The car corner bracket can easily be formed as an elongated fillet.

Preferentially at least one retainer is arranged in the end part of the second outer flank forming the front wall of the first reception. The abutment member may be inserted in the retainer from the outside of an elevator car arrangement and from a direction which is in line with the lengths to be adjusted. Hence the adjustment is easy to handle.

Preferentially at least one retainer is arranged in the first outer flank. The end part of the first inner flank, which forms the front wall of the second reception, comprises a hole, which is aligned with the retainer.

From the outside of the car corner bracket the retainer of the second reception has the same appearance as the retainer of the first reception and is to be used in the analogous way for the panel element of the other wall. Hence the establishing of an adjustable corner connection is simple.

The retainer is preferentially designed for an engagement with a specific abutment element. The retainer may provide an array of openings for positioning the abutment member at different locations. The retainer may have a specific surface structure for mating with a corresponding structure of the abutment member, for example for establishing a ratchet mechanism.

In a preferred embodiment the retainer comprises a structured surface, preferably an inner thread, in particular an insert nut, for engaging a corresponding surface structure, preferably an outer thread, of an abutment element. The thread and in particular the insert nut may comply with a technical standard, such that standard technical components as conventional screws and nuts can be used.

The car corner bracket can be formed form a light metal such as in particular aluminium. A car corner bracket profile may be extruded or the car corner bracket may be a welded sheet metal profile.

The car corner bracket may then be cut into pieces of a suitable length for a specific elevator car. Holes may be provided and insert nuts made of steel may be attached to the profiles.

In an advantageous embodiment the car corner bracket comprises at least one lug. The lug may be used for fixation of the car corner bracket to a support frame of the elevator car. Preferably the lug is arranged at a part of the car corner bracket which points downwardly in the assembled state.

In particular the lug is an axial extension of a first outer flank and/or a second outer flank, especially the lug forms a common surface with the respective flank. The lug may be laid against a support and thereby defines the arrangement of the car corner bracket and thus the dimensions of the elevator car. The lug may contain a long hole.

The receptions allow for inserting the panel elements. One car corner bracket may have receptions for panel elements of different thicknesses. In a preferred embodiment the receptions are formed by planar portions and, preferably, said planar portions are suitable for accommodation of panel elements of equal thickness.

Regularly in an elevator car with a rectangular base, each corner is equipped with at least one car corner bracket. Preferably the receptions include a corner angle of 90 degrees.

According to the invention a car corner member comprises a car corner bracket as described above and at least one abutment element. Preferable the car corner member comprises an abutment element for each retainer. The car corner member therefore is ready for fixing panel elements.

Advantageously the abutment element comprises a surface structure for engagement with a retainer of the car corner bracket, such that the abutment element may be fixed in a certain position within the retainer to provide an abutment surface in a specific position. Preferably the abutment element may be fixed in a plurality of positions such that the position of the abutment surface is adjustable. The surface structure may be a thread, which may interact with a thread of the retainer.

The abutment element may comprise outer thread, especially at an end part pointing towards the panel element in the assembled state for engagement with a threaded hole in a front face of a panel element. The abutment element may not only define the position of the panel element within the reception, but also fix the panel element to the car corner bracket.

According to the invention an elevator car arrangement comprises a car corner member as described above and at least one panel element. The width of the panel element complies with the receptions, for example with the distance between inner and outer flank, such that the panel element can be inserted into the reception and does not have too much play. Hence the car corner bracket not only provides a lateral support for the panel element but also guidance for a determined position perpendicular to the surface of the panel.

According to the invention an elevator car comprises at least one elevator car arrangement as described above. The elevator car may comprise at least two car corner brackets for adjusting the width of the elevator car. The elevator car may comprise four car corner brackets for adjusting the depth and/or the width of the elevator car and the width of the door opening.

According to the specified nominal capacity of an elevator car (such as the required rated load and the passenger capacity) the dimension of the car can vary. The width of the car and the depth of the car define a stand area for goods and passengers, and, so at least with respect to the floor plan the car dimensions (i.e. car width, car depth) are dependent on the position and positioning of the panel elements forming the car walls and the corner brackets. In other words, the usually cuboid car body forming the interior space to accommodate passengers and goods is essentially dependent on the car walls. The corner brackets may be fixed on an appropriate floor structure having a matched sized. However, it would also be conceivable using a standardized modular car floor where the corner brackets can be displaced inwards from the edges of this floor structure and fixed there with suitable mounting interfaces on the floor.

In a preferred embodiment the elevator car comprises a lateral support and/or a rear support for fixing car corner brackets. Preferentially the lateral support and the rear support may be assembled to define various dimensions of the elevator car. Once the lateral support, the rear support and the car corner brackets are fixed to each other the dimensions of the elevator car are defined. However, the width of the wall panes is not exactly predetermined since the car corner brackets provide for some tolerance.

According to the invention a method for assembling an elevator car arrangement comprising at least two car corner members described as above, comprises the following steps:
A side wall element is arranged in a reception of a first car corner bracket and preferably in reception of a second car corner bracket. At least one abutment element is inserted in a retainer of a reception of the first car corner bracket and preferably at least one further abutment element is inserted in a retainer of a reception of the second car corner bracket.

The side wall element then is shifted and the at least one abutment element is positioned, such that the side wall element has a desired and preferably a fixed position.

Depending on the width of the side wall element, the side wall element extends more or less deeply within the reception. The side wall element preferably is wide enough to extend into receptions of car corner brackets on both lateral sides of the wall element. The abutment surfaces of the abutment elements are brought into positions, such that the wall element is supported from both lateral sides. The wall element then has a fixed position.

For assembling a front wall panel, positions of the abutment elements have to be found which are adequate for arranging front wall panels such that they leave an opening suitable for the elevator door. The installation of new wall panels is convenient, because the wall panels can be used as they are. The panel elements are supported by the receptions and the abutment elements and it is not necessary to provide bores or to apply additional fixation elements.

The invention is explained in more detail in the following in exemplary embodiments and with the aid of drawings.

The figures show
- Figure 1: a schematic sectional representation of an example of a car corner bracket according to the invention in a first plane;
- Figure 2: a schematic sectional representation of the same example of a car corner bracket according to the invention in a second plane;
- Figure 3: a schematic sectional representation of the same example of a car corner bracket according to the invention in a third plane;
- Figure 4: a schematic representation of an example of a car corner bracket in a perspective view;
- Figure 5: a schematic representation of an example of a car corner member in a partial sectional and partial perspective view;
- Figure 6: a schematic representation of a part of an elevator car arrangement in a perspective view;
- Figure 7: a schematic representation of an example of an elevator car in a sectional view.

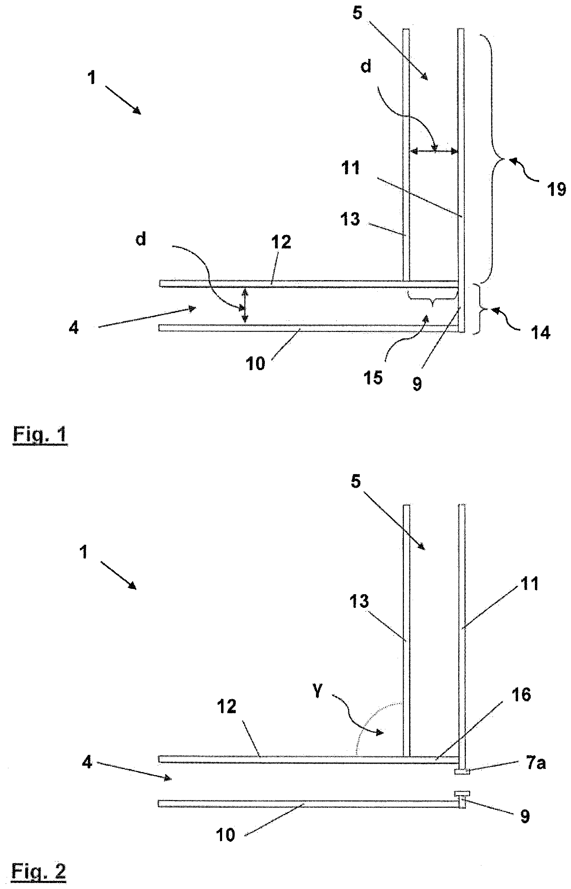

Figures 1-3 show schematic sectional representations of an example of a car corner bracket 1 according to the invention in different planes. The car corner bracket 1 comprises two receptions 4, 5 suitable for inserting panel elements not explicitly shown in the figure.

The receptions 4, 5 are equipped with retainers 7a, 7b for receiving abutment elements for defining a position and/or fixing panel elements, the abutment elements and the panel elements not being explicitly shown in the figures 1-3. One of the retainers 7a is arranged in a front wall 9 of one of the reception 4.

The car corner bracket 1 comprises a first outer flank 10 and a second outer flank 11, including a corner angle γ and a first inner flank 12 and a second inner flank 13, including the corner angle γ. The first inner flank 12 and the first outer flank 11 as well as the second inner flank 13 and the second outer flank 11 are arranged in parallel and have a distance d. The first inner flank 12, the first outer flank 10 and an end part 14 of the second outer flank 10 form a first receptions 4. The second inner flank 13, an end part 15 of the first inner flank 12 and a second part 19 of the second outer flank 11 form a second reception 5. As can be seen in Figure 1, the second outer flank 11 consists of two portions: the end part 14 (as a first part) and the second part 19.

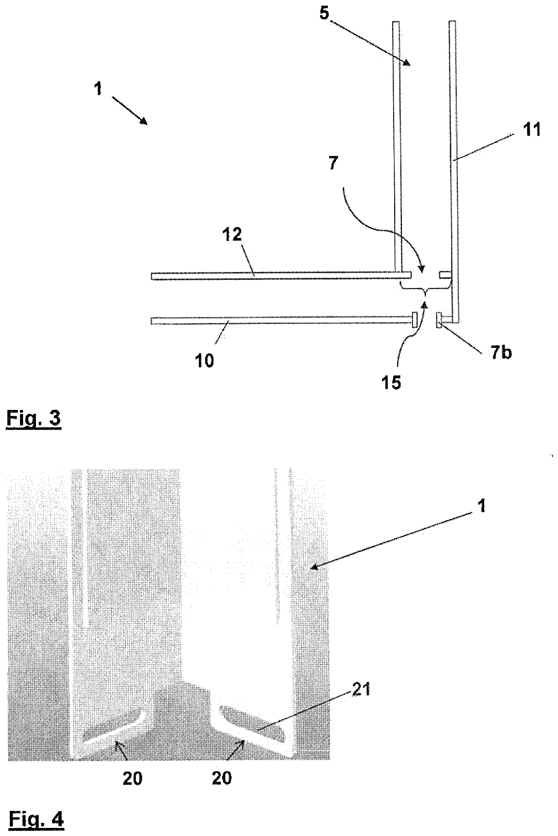

A retainer 7a (see figure 2) is arranged in the end part 14 of the second outer flank 10, which forms the front wall 9 of the first reception 4. A further retainer 7b (see figure 3) is arranged in the first outer flank 10. The end part 15 of the first inner flank 12, which forms the front wall 16 of the second reception 5, comprises a hole 17 being aligned with the retainer 7.

Figure 4 shows a schematic representation of an example of a car corner bracket 1 in a perspective view. The car corner bracket 1 comprises a lug 20 with a long hole 21.

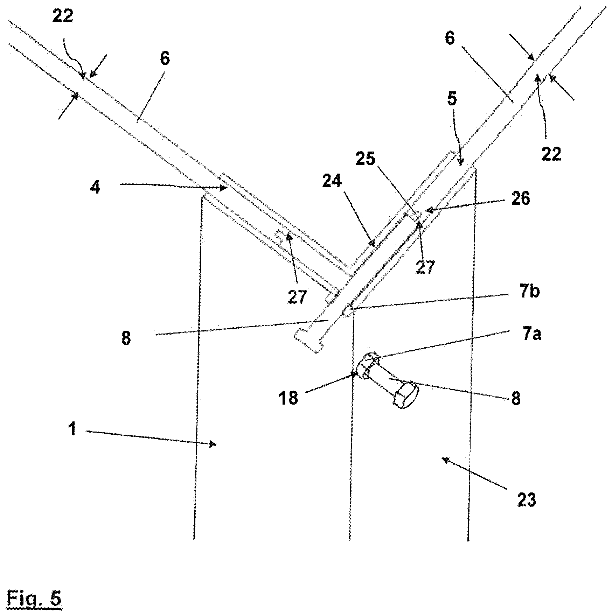

Figure 5 shows a schematic representation of an example of a car corner member 23 in a partial sectional and partial perspective view. The car corner member 23 comprises a car corner bracket 1 and abutment elements 8. The retainers 7a, 7b comprise insert nuts 18, for engaging a surface structure 24, in this case an outer thread of an abutment element 8. The receptions 4, 5 are suitable for accommodation of panel elements 6 of equal thickness 22. A screw having a rivet head forms the abutment element 8. After the panel element 6 is inserted in the car bracket element 1 and placed in the right position, the abutment element 8 can be screwed in until the front end 27 of the abutment element reaches a front face 26 of the panel element 6 so that the panel element is fixed in position. In the example shown in Figure 5 a longitudinal groove 25 is located in the front face 27 of the panel element 6. It is, however, also conceivable that the panel element 6 has a plane front face.

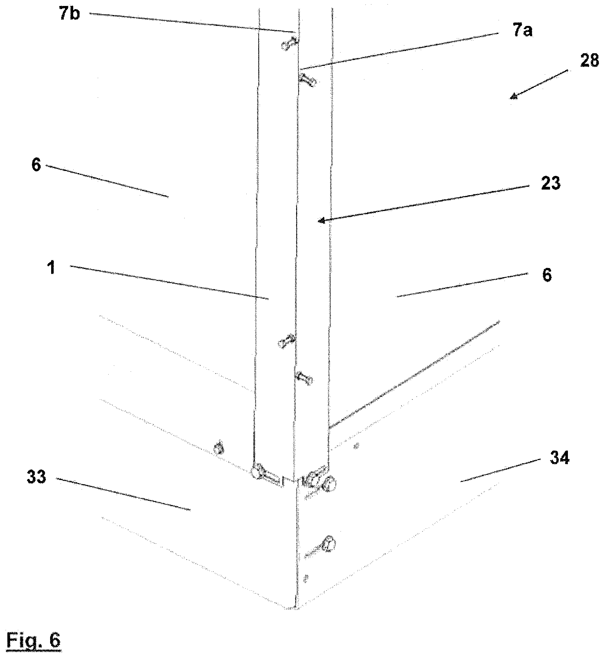

Figure 6 shows a schematic representation of a part of an elevator car arrangement 28 in a perspective view. The elevator car arrangement 28 comprises a car corner member 23 and panel element 6. Retainers 7a, 7b for receiving abutment members 8 abutting panel elements 6 of different walls are arranged alternating one upon the other.

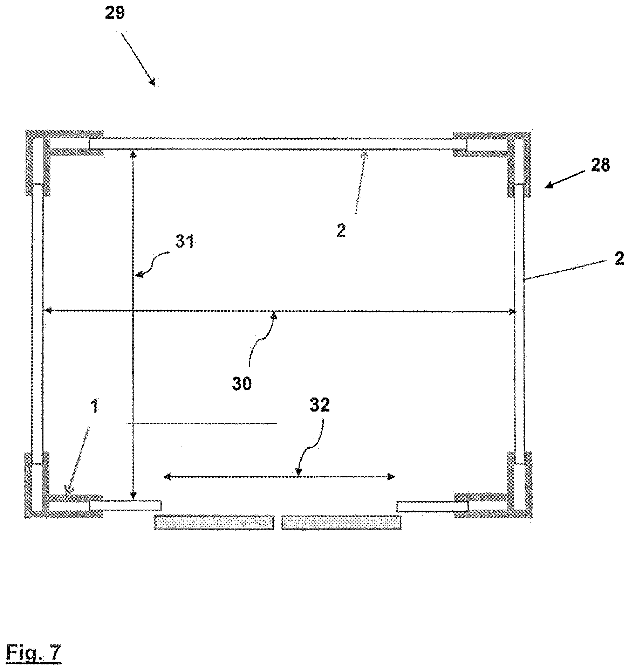

The car bracket element 1 is fixed to a lateral support 33 and to a rear support 34. The lateral support 33 and the rear support 34 define the position of the car bracket element 1 and hence the dimension of the elevator car 29 as can be seen in figure 7 which shows a schematic representation of an example of an elevator car 29 in a sectional view. The elevator car 29 comprises four elevator car arrangements 28, joining side wall elements 2. The elevator car 29 comprises four car corner brackets 1 for adjusting the depth 31 and the width 30 of the elevator car 29 and the width 32 of the door opening.

## Claims

1. A car corner bracket (1) for joining two side wall elements (2) of an elevator car (3), the car corner bracket (1) comprising two receptions (4, 5) suitable for fitting in panel elements (6), at least one of the receptions (4, 5) being equipped with at least one retainer (7a, 7b) for receiving an abutment element (8) for defining a position and/or fixing a panel element (6), **characterised in that** preferably at least one of the retainers (7a) is arranged in a front wall (9) of one of the receptions (4, 5),
wherein the car corner bracket (1) comprises a first outer flank (10) and a second outer flank (11), including a corner angle (γ) and a first inner flank (12) and a second inner flank (13), including a corner angle (γ),
the first inner flank (12) and the first outer flank (10) as well as the second inner flank (13) and the second outer flank (11) being arranged in parallel and having a distance (d),
the first inner flank (12), the first outer flank (10) and an end part (14) of the second outer flank (10) define a first of said receptions (4),
the second inner flank (13), an end part (15) of the first inner flank (12) and a second part (19) of the second outer flank (11) define a second of said receptions (5).

2. The car corner bracket (1) as claimed in claim 1, wherein at least one retainer (7a) is arranged in the end part (14) of the second outer flank (11), which forms the front wall (9) of the first reception (4).

3. The car corner bracket (1) as claimed in claims 1 or 2, wherein at least one retainer (7b) is arranged in the first outer flank (10) and wherein the end part (15) of the first inner flank (12), which forms the front wall (16) of the second reception (5), comprises a hole (17) being aligned with the retainer (7b).

4. The car corner bracket (1) as claimed in claims 1-3, wherein the retainer (7a, 7b) comprises a structured surface, in particular an insert nut (18), for engaging a corresponding surface structure (24), in particular an outer thread, of an abutment element (8).

5. The car corner bracket (1) as claimed in claims 1-4, wherein the car corner bracket (1) is an elongated profiled corner fillet, in particular made of aluminium, which is extruded or which is a welded sheet metal profile.

6. The car corner bracket (1) as claimed in claims 1-5, wherein the car corner bracket (1) comprises at least one lug (20), particularly with a long hole (21), in particular being an axial extension of a first outer flank (10) and/or a second outer flank (11).

7. The car corner bracket (1) as claimed in claims 1-6, wherein the receptions (4, 5) are formed by planar portions.

8. The car corner bracket (1) as claimed in claims 1-7, wherein the receptions include a corner angle (γ) of 90 degrees.

9. A car corner member (23) comprising car corner bracket (1) as claimed in one of claims 1-8 and at least one abutment element (8).

10. The car corner member (23) as claimed in claim 9 wherein the abutment element (8) comprises a surface structure (24), in particular a thread, for engagement with a retainer (7a, 7b) of the car corner bracket (1).

11. An elevator car arrangement (28) comprising a car corner member (23) as claimed in one of claims 9 - 10 and at least one panel element (6).

12. An elevator car (29) comprising at least one car corner member (23) as claimed in in one of claims 9 - 10 and at least one panel element (6), wherein the elevator car (29) comprises at least two car corner brackets (1) for adjusting the width (30) of the elevator car (29), or wherein the elevator car (29) comprises four car corner brackets (1) for adjusting the depth (31) and/or the width of (30) the elevator car (29) and the width of the door opening (32).

13. The elevator car (29) as claimed in claim 12 wherein the elevator car (29) comprises a lateral support (33) and/or a rear support (34) for fixing a car corner bracket (1).

14. Method for assembling an elevator car arrangement comprising two car corner members (23) as claimed in claims 9 - 10, comprising the steps of arranging a side wall element (2) in a reception (4, 5) of a first car corner bracket (1) and preferably in reception (4, 5) of a second car corner bracket (1), inserting at least one abutment element (8) in a retainer (7) of a reception (4, 5) of the first car corner bracket (1) and preferably inserting at least one abutment element (8) in a retainer (7a, 7b) of a reception (4, 5) of the second car corner bracket (1), shifting the side wall element (2) and positioning the at least one abutment element (8), such that the side wall element (2) has a desired and preferably a fixed position.

## Patentansprüche

1. Kabineneckhalterung (1) zum Verbinden von zwei Seitenwandelementen (2) einer Aufzugskabine (3), wobei die Kabineneckhalterung (1) zwei Aufnahmen (4, 5) umfasst, die zum Einbauen von Plattenelementen (6) geeignet sind, wobei mindestens eine der Aufnahmen (4, 5) mit mindestens einem Halter (7a, 7b) zum Aufnehmen eines Anschlagelements (8) zum Definieren einer Position und/oder zum Befestigen eines Plattenelements (6) ausgestattet ist, **dadurch gekennzeichnet, dass** vorzugsweise mindestens einer der Halter (7a) in einer Vorderwand (9) einer der Aufnahmen (4, 5) angeordnet ist,
wobei die Kabineneckhalterung (1) eine erste Außenflanke (10) und eine zweite Außenflanke (11), einschließlich eines Eckwinkels (γ), und eine erste Innenflanke (12) und eine zweite Innenflanke (13), einschließlich eines Eckwinkels (γ), umfasst,
wobei die erste Innenflanke (12) und die erste Außenflanke (10) sowie die zweite Innenflanke (13) und die zweite Außenflanke (11) parallel angeordnet sind und einen Abstand (d) aufweisen,
wobei die erste Innenflanke (12), die erste Außenflanke (10) und ein Endteil (14) der zweiten Außenflanke (10) eine erste der Aufnahmen (4) definieren, wobei die zweite Innenflanke (13), ein Endteil (15) der ersten Innenflanke (12) und ein zweiter Teil (19) der zweiten Außenflanke (11) eine zweite der Aufnahmen (5) definieren.

2. Kabineneckhalterung (1) nach Anspruch 1, wobei mindestens ein Halter (7a) in dem Endteil (14) der zweiten Außenflanke (11), der die Vorderwand (9) der ersten Aufnahme (4) ausbildet, angeordnet ist.

3. Kabineneckhalterung (1) nach Anspruch 1 oder 2, wobei mindestens ein Halter (7b) in der ersten Außenflanke (10) angeordnet ist und wobei der Endteil (15) der ersten Innenflanke (12), der die Vorderwand (16) der zweiten Aufnahme (5) ausbildet, ein Loch (17) umfasst, das mit dem Halter (7b) ausgerichtet ist.

4. Kabineneckhalterung (1) nach Anspruch 1-3, wobei der Halter (7a, 7b) eine strukturierte Oberfläche, insbesondere eine Einpressmutter (18) zum Ineingriffnehmen einer korrespondierenden Oberflächenstruktur (24), insbesondere ein Außengewinde eines Anschlagelements (8), umfasst.

5. Kabineneckhalterung (1) nach Anspruch 1-4, wobei die Kabineneckhalterung (1) eine längliche profilierte Eckausrundung, insbesondere aus Aluminium, ist, die stranggepresst ist oder die ein geschweißtes Blechprofil ist.

6. Kabineneckhalterung (1) nach Anspruch 1-5, wobei die Kabineneckhalterung (1) mindestens einen Vorsprung (20) umfasst, insbesondere mit einem langen Loch (21), der insbesondere eine axiale Verlängerung einer ersten Außenflanke (10) und/oder einer zweiten Außenflanke (11) ist.

7. Kabineneckhalterung (1) nach Anspruch 1-6, wobei die Aufnahmen (4, 5) durch ebene Abschnitte ausgebildet sind.

8. Kabineneckhalterung (1) nach Anspruch 1-7, wobei die Aufnahmen einen Eckwinkel (γ) von 90 Grad beinhalten.

9. Kabineneckelement (23), umfassend eine Kabineneckhalterung (1) nach einem der Ansprüche 1-8 und mindestens ein Anschlagelement (8).

10. Kabineneckelement (23) nach Anspruch 9, wobei das Anschlagelement (8) eine Oberflächenstruktur (24), insbesondere ein Gewinde zum Eingriff mit einem Halter (7a, 7b) der Kabineneckhalterung (1), umfasst.

11. Aufzugskabinenanordnung (28), umfassend ein Kabineneckelement (23) nach einem der Ansprüche 9-10 und mindestens ein Plattenelement (6).

12. Aufzugskabine (29), umfassend mindestens ein Kabineneckelement (23) nach einem der Ansprüche 9-10 und mindestens ein Plattenelement (6), wobei die Aufzugskabine (29) mindestens zwei Kabineneckhalterungen (1) zum Einstellen der Breite (30) der Aufzugskabine (29) umfasst, oder wobei die Aufzugskabine (29) vier Kabineneckhalterungen (1) zum Einstellen der Tiefe (31) und/oder der Breite der (30) Aufzugskabine (29) und der Breite der Türöffnung (32) umfasst.

13. Aufzugskabine (29) nach Anspruch 12, wobei die Aufzugskabine (29) eine seitliche Stütze (33) und/oder eine hintere Stütze (34) zum Befestigen einer Kabineneckhalterung (1) umfasst.

14. Verfahren zum Zusammenbauen einer Aufzugskabinenanordnung, umfassend zwei Kabineneckelemente (23) nach Anspruch 9-10, umfassend die Schritte des Anordnens eines Seitenwandelements (2) in einer Aufnahme (4, 5) einer ersten Kabineneckhalterung (1) und vorzugsweise in einer Aufnahme (4, 5) einer zweiten Kabineneckhalterung (1), eines Einsetzens mindestens eines Anschlagelements (8) in einen Halter (7) einer Aufnahmes (4, 5) der ersten Kabineneckhalterung (1) und vorzugsweise des Einsetzens mindestens eines Anschlagelements (8) in einen Halter (7a, 7b) einer Aufnahme (4, 5) der zweiten Kabineneckhalterung (1), eines Verschiebens des Seitenwandelements (2) und eines Positionierens des mindestens einen Anschlagelements (8), derart, dass das Seitenwandelement (2) eine gewünschte und vorzugsweise eine befestigte Position aufweist.

## Revendications

1. Support en cornière de cabine (1) pour assembler deux éléments de paroi latérale (2) d'une cabine d'ascenseur (3), le support en cornière de cabine (1) comprenant deux éléments de réception (4, 5) adaptés à un montage dans des éléments de panneau (6), au moins un des éléments de réception (4, 5) étant équipé d'au moins un élément de retenue (7a, 7b) pour recevoir un élément de butée (8) pour définir une position et/ou fixer un élément de panneau (6), **caractérisé en ce que**, de préférence, au moins un des éléments de retenue (7a) est disposé dans une paroi avant (9) de l'un des éléments de réception (4, 5),
le support en cornière de cabine (1) comprenant un premier flanc extérieur (10) et un second flanc extérieur (11), comportant un angle de coin (γ) et un premier flanc intérieur (12) et un second flanc intérieur (13), comportant un angle de coin (γ),
le premier flanc intérieur (12) et le premier flanc extérieur (10) ainsi que le second flanc intérieur (13) et le second flanc extérieur (11) étant disposés en parallèle et ayant une distance (d),
le premier flanc intérieur (12), le premier flanc extérieur (10) et une partie d'extrémité (14) du second flanc extérieur (10) définissant un premier élément de réception desdits éléments de réception (4), le second flanc intérieur (13), une partie d'extrémité (15) du premier flanc intérieur (12) et une seconde partie (19) du second flanc extérieur (11) définissant un second élément de réception desdits éléments de réception (5).

2. Support en cornière de cabine (1) selon la revendication 1, dans lequel au moins un élément de retenue (7a) est disposé dans la partie d'extrémité (14) du second flanc extérieur (11), qui forme la paroi avant (9) du premier élément de réception (4).

3. Support en cornière de cabine (1) selon la revendication 1 ou 2, dans lequel au moins un élément de retenue (7b) est disposé dans le premier flanc extérieur (10) et dans lequel la partie d'extrémité (15) du premier flanc intérieur (12), qui forme la paroi avant (16) du second élément de réception (5), comprend un trou (17) aligné avec l'élément de retenue (7b).

4. Support en cornière de cabine (1) selon les revendications 1 à 3, dans lequel l'élément de retenue (7a, 7b) comprend une surface structurée, en particulier, un écrou d'insertion (18), pour entrer en prise avec une structure de surface correspondante (24), en particulier, un filetage extérieur, d'un élément de butée (8).

5. Support en cornière de cabine (1) selon les revendications 1 à 4, dans lequel le support en cornière de cabine (1) est un congé de coin profilé allongé, en particulier, en aluminium, qui est extrudé ou qui est un profilé en tôle soudée.

6. Support en cornière de cabine (1) selon les revendications 1 à 5, dans lequel le support en cornière de cabine (1) comprend au moins une patte (20), en particulier avec un long trou (21), étant en particulier une extension axiale d'un premier flanc extérieur (10) et/ou d'un second flanc extérieur (11).

7. Support en cornière de cabine (1) selon les revendications 1 à 6, dans lequel les éléments de réception (4, 5) sont formées par des parties planes.

8. Support en cornière de cabine (1) selon les revendications 1 à 7, dans lequel les éléments de réception comportent un angle de coin (γ) de 90 degrés.

9. Organe de coin de cabine (23) comprenant un support en cornière de cabine (1) selon l'une des revendications 1 à 8 et au moins un élément de butée (8).

10. Organe de coin de cabine (23) selon la revendication 9, dans lequel l'élément de butée (8) comprend une structure de surface (24), en particulier un filetage, pour être mis en prise avec un élément de retenue (7a, 7b) du support en cornière de cabine (1).

11. Agencement de cabine d'ascenseur (28) comprenant un organe de coin de cabine (23) selon l'une des revendications 9 à 10 et au moins un élément de panneau (6).

12. Cabine d'ascenseur (29) comprenant au moins un organe de coin de cabine (23) selon l'une des revendications 9 à 10 et au moins un élément de panneau (6), la cabine d'ascenseur (29) comprenant au moins deux supports en cornière de cabine (1) pour ajuster la largeur (30) de la cabine d'ascenseur (29), ou la cabine d'ascenseur (29) comprenant quatre supports en cornière de cabine (1) pour ajuster la profondeur (31) et/ou la largeur (30) de la cabine d'ascenseur (29) et la largeur de l'ouverture de porte (32).

13. Cabine d'ascenseur (29) selon la revendication 12, dans laquelle la cabine d'ascenseur (29) comprend un soutien latéral (33) et/ou un soutien arrière (34) pour fixer un support en cornière de cabine (1).

14. Procédé d'assemblage d'un agencement de cabine d'ascenseur comprenant deux organes de coin de cabine (23) selon les revendications 9 à 10, comprenant les étapes consistant à disposer un élément de paroi latérale (2) dans un élément de réception (4, 5) d'un premier support en cornière de cabine (1) et, de préférence, dans un élément de réception (4, 5) d'un second support en cornière de cabine (1), à insérer au moins un élément de butée (8) dans un élément de retenue (7) d'un élément de réception (4, 5) du premier support en cornière de cabine (1) et, de préférence, à insérer au moins un élément de butée (8) dans un élément de retenue (7a, 7b) d'un élément de réception (4, 5) du second support en cornière de cabine (1), à déplacer l'élément de paroi latérale (2) et à positionner l'au moins un élément de butée (8), de telle sorte que l'élément de paroi latérale (2) a une position souhaitée et, de préférence, fixe.
